# EUROPÄISCHE PATENTANMELDUNG

(11) **EP 1 030 090 A2**
(43) Veröffentlichungstag der Anmeldung: **23.08.2000**
(21) Anmeldenummer: 00102918.0
(22) Anmeldetag: 12.02.2000
(51) Int. Cl.: F16K 31/06

(54) **Gaswechselventil mit elektromagnetischer Stelleinrichtung**

(30) Priorität: 18.02.1999 DE 19906657
(71) Anmelder: Continental ISAD Electronic Systems GmbH & Co. KG, 86899 Landsberg (DE)
(72) Erfinder: Masberg, Ullrich, Prof. Dr., 51503 Rösrath (DE)
(74) Vertreter: Schneider, Egon

(57) **Zusammenfassung**

Die Verwendung eines Linearmotors (22) als elektromagnetische Stelleinrichtung in einem Gaswechselventil (20) ermöglicht einen detailgenau steuerbaren Auflaufvorgang des Ventil-öffnens und des Ventil-Schließens.

Der Linearmotor (22) weist eine zylindrische Gestalt auf, mit einem stabförmig-zylindrischen, aus (weich-)magnetischem Material bestehenden, den Läufer (26) umhüllenden, mit Spulenwicklungen versehenen, hohlzylindrischen Stator (24).
Die Spulenanordnung (24) besteht aus einzelnen Spulenelementen, die jeweils separat ansteuerbar sind. Die Relativbewegung zwischen Stator (24) und Läufer (26) kann in beiden Richtungen (32) und in jeder Position präzise gesteuert werden, weil die jeweilige Position mit Hilfe von Wegerfassungssensoren genau bekannt ist.

Für Gaswechselventile (20) eines Hubkolbenmotors, eines Kolbenverdichters oder einer Maschine gleichen Wirkprinzips.

## Beschreibung

Die Erfindung betrifft ein Gaswechselventil in einem Hubkolbenmotor, einem Kolbenverdichter oder einer Maschine gleichen Wirkprinzips. Das Gaswechselventil wird von einer elektromagnetischen Stelleinrichtung betrieben.

Solche Ventilsteuerungen weisen in der Regel eine elektromagnetische Stelleinrichtung zum öffnen und eine als mechanische Feder ausgebildete Spannvorrichtung zum Schließen des Ventils auf. Nähere Einzelheiten derartiger Konstruktionen sind z. B. den Schriften DB-PS 30 24 109 und DE-PS 35 13 103, sowie den PCT-Anmeldungen WO 95/00787 und WO 95/00959 zu entnehmen.

Die bisher bekannten Ventiltriebe auf elektrischer Basis nutzen die Anziehungswirkung aus, die von einem elektromagnetischen Feld einer stromdurchflossenen Spule auf einen ferromagnetischen Anker ausgeübt wird.

An einer Seite dieses Ankers befindet sich ein Ventilschaft. Die Bewegung gegenüber einer ortefesten Spule erfolgt "ballistisch" und ist damit während der Flugphase unkontrollierbar. Die Magnetkraft wird hier durch die Federkraft beidseitig vom Anker angebrachter Federn unterstützt. Zum Erzielen der Flugphase muß das aus Magnetanker und Federn bestehende System in Resonanz versetzt werden. (Grundsätzlich wäre auch ein elektromagnetischer Ventiltrieb ohne Federn denkbar. Da aber bei Stromausfall der Ventilteller mit dem Kolbenboden kollidieren würde, kann bei den bisher bekanntgewordenen Konstruktionen auf die Verwendung von Rückholfedern nicht verzichtet werden.)
Wegen der unkontrollierbaren Flugphase ist auch die "Landung" an den Endpunkten frei, d. h., im Regelfall ist dort die Endgeschwindigkeit größer Null. Der elastische Aufprall hat eine große Geräuschentwicklung zur Folge. Auf die Dauer kann das Aufprallen zur Zerstörung des Systems führen.
Eine präzise Steuerung des Bewegungsablaufs, insbesondere dessen Endphase, ist mit den bekannten elektromagnetischen Ventilsteuerungen nicht möglich.

Die Aufgabe der vorliegenden Erfindung besteht darin, eine elektromagnetische Ventilsteuerung zu schaffen, mit deren Hilfe ein detailgenau steuerbarer Ablaufvorgang des öffnens und Schließens des Ventile ermöglicht wird.

Gemäß Anspruch 1 basiert die Lösung dieser Aufgabe auf Verwendung eines Linearmotors als elektromagnetische Stelleinrichtung in einem Gaswechselventil.

Die Verwendung von Linearmotoren zur Erzeugung einer Translationsbewegung ist bekannt. Durch Einführung der Linearmotortechnik wurden auf verschiedenen Gebieten neue Möglichkeiten der Bewegung und Positionierung erschlossen, z. B. bei anzeigenden und schreibenden Geräten, für die Bewegung von Köpfen zum Lesen und Einprägen von magnetischen Signalen auf magnetisierbare Scheiben, zur Erzeugung einer Schubkraft bei Hydraulikkomponenten, für den Einsatz bei Hochgeschwindigkeitsfahrzeugen usw.. Durch die Erfindung wird die an sich bekannte Linearmotortechnik erstmalig zur Steuerung von Gaswechselventilen verwendet.

Der hier zur Anwendung gelangende Linearmotor weist in seiner einfachsten Ausführung einen aus einer zylindrischen Spulenanordnung bestehenden Stator auf. Den Läufer bildet ein koaxial innerhalb der Statorwicklungen befindlicher, axial bewegbarer Stab aus weichmagnetischem Werkstoff. Die Spulenanordnung besteht aus einzelnen Spulenelementen, die jeweils separat ansteuerbar sind. Die Relativbewegung zwischen Stator und Läufer kann in beiden Richtungen und in jeder Position gesteuert werden, weil die jeweilige Position mit Hilfe von Sensoren zur Wegerfassung genau bekannt ist.

Aus der DE 23 06 319 ist ein elektromagnetisches Schubgerät bekannt. Dieses Schubgerät weist einen zylindrischen Aufbau auf und funktioniert nach dem Linearmotor-Prinzip. Die auf einer Achse hin und her bewegbaren Wicklungen werden über Kollektorschleifringe gespeist. Eine derartige, über Kollektorschleifringe erfolgende Stromversorgung wäre für eine Ventilsteuerung ungeeignet, weil die Zuverlässigkeit bei einer hochfrequenten Dauerbelastung, wie sie bei Hubkolbenmotoren gegeben ist, nicht gewährleistet wäre.

Bei dem erfindungsgemäßen Aufbau ist hingegen lediglich der ortsfeste Stator als stromführende Spulenanordnung ausgebildet, der stabförmig ausgebildete Läufer wird ausschließlich induktiv versorgt und benötigt weder Schleifkontakte noch flexible Stromzuführungen.

Um bei diesem Prinzip große Axialkräfte aufzubringen, wird (im Rahmen des durch den Bauraum Möglichen) ein möglichst großer Durchmesser des zwischen Stator und Läufer befindlichen Luftspalts angestrebt. Dieser Durchmesser wird von der Größe des Hubraumdurchmessers des Verbrennungsmotors begrenzt und kann zwischen 30 und 60 mm liegen.

Während im Bereich 40 bis 60 mm ausreichend große Kräfte und Beschleunigungen erreicht werden können, scheint dies bei der gemäß Anspruch 1 genannten Lösung im Bereich 30 bis 40 mm nur eingeschränkt erreichbar.

Um diese erforderlichen Kräfte auch bei kleineren Abmessungen zu erreichen (diese sind insbesondere bei 3-, 4- und 5-Ventilmotoren, jeweils pro Zylinder, erforderlich), geht eine bevorzugte Lösungsvariante (Anspruch 2) von einem hohlzylindrischen Stator und zwei koaxial zueinander angeordneten Läufer-Zylindern aus. Durch diese Bauform wird die wirksame Luftspaltfläche vergrößert und damit werden entweder bei gleichen Außenabmessungen größere Kräfte oder bei gleichen Kräften kleinere Abmessungen erzielt.
Der Spulenbereich ist bei dieser Lösungsvariante in mindestens eine innere und mindestens eine äußere Stator-Spule (Cu) aufgeteilt, die jeweils getrennt angesteuert werden können.

Es sind zwar "doppelseitige" lineare Induktionsmotoren bekannt. Die DE 22 02 052 beschreibt einen solchen Linearmotor, dem auf beiden Längsseiten je eine Läuferschiene auf Abstand gegenübersteht. Dieser lediglich zweidimensionale Vorschlag läßt sich nicht ohne weiteres auf die vorliegende Problematik übertragen.

Die DE 20 60 448 beschreibt ebenfalls einen "doppelseitigen" Linearmotor. Dieser Linearmotor besteht aus einem rohrförmigen Gehäuse und einem zylindrischen Mittelstück, die beide aus (weich-)magnetischem Material bestehen und über eine ebenfalls (weich-)magnetische Endplatte miteinander verbunden sind. Der Zwischenraum zwischen Rohr und Mittelstück wird teilweise von einem radialpolarisierten Magneten ausgefüllt. In dem verbleibenden Luftspalt befindet sich eine axialbewegliche Spulenanordnung. Da diese bewegliche Spulenanordnung auf flexible Stromzuführungen angewiesen ist, kommt sie für eine hochfrequente Ventilsteuerung nicht infrage. Die kinematische Umkehr wäre - wegen der großen Massenträgheit des zu bewegenden Magneten usw. - ebenfalls für eine hochfrequente Ventilsteuerung ungeeignet.

Um die Wirkung der elektromagnetischen Felder zu erhöhen, kann der Raum zwischen der inneren und äußeren Spule mit einem ferromagnetischen Material (z. B. Fe) ausgefüllt sein. Dies kann durch einen eingelegten Fe-Ring oder durch Vorprägung des Kupferbleches erfolgen.

Die Ausführung des Spulenbereichs kann - je nach erforderlichem Wirkungsgrad und/oder gewünschten Kosten - unterschiedlich ausfallen. Es können folgende Varianten unterschieden werden:
a) Ausführung als ausgestanzter Cu-Ring mit rechteckigem Querschnitt,
b) aus Draht gewickeltes, in vertikaler Richtung einlagiges Spulenelement,
c) ausgestanzter und geprägter oder auch getrennter Cu-Ring.

Die beiden erstgenannten Lösungsvarianten eignen sich für Fälle, bei denen während des Betriebes ein Drehen des Ventile um seine vertikale Achse zulässig ist (gleichmäßige Belastung bzw. Abnutzung des Ventildeckels). Liegt jedoch der Wunsch nach noch kleinerer Bauform und/oder höheren Kräften vor, so kann dies auch durch eine spiralförmige Gestaltung des Luftspaltes (mit entsprechenden Konsequenzen für Läufer und Stator) erfolgen. Unter Spirale wird hier nicht eine Schraubenlinie verstanden sondern eine ebene Kurve, die in (unendlich) vielen, immer weiter werden Windungen eine fiktive Linie umläuft. Solch eine Spirale verfügt in der Summe über eine deutlich größere Luftspaltfläche.

Eine weitere mögliche Gestaltungsform ist eine ovale oder elliptische Gestaltung des Luftspaltes, wenn z. B. aufgrund der baulichen Gegebenheiten im Zylinderkopf zwei Ventile nebeneinander liegen und die Breite deutlich geringer ist als die Länge senkrecht dazu.

Falls auch hier ein Drehen des Ventile erforderlich ist, kann dies entweder durch Drehen des Gesamtaufbaus oder durch eine dreh- und lösbare Verbindung zwischen Ventilschaft und dem Läufer erreicht werden.

Die DE 22 43 622 beschreibt eine elektromagnetische Einstellvorrichtung mit einem Stator und einem Rotor, wobei die sich gegenüberstehenden zylindrischen Flächen von Stator und Rotor jeweils mit Rippen versehen sind, und wobei insbesondere die Rippen des Rotors einander schneidende Schraubenlinien sind. Diese sich schneidenden Schraubenlinien stellen gewissermaßen die Koordinaten für einen zweidimenionalen Bewegungsvorgang dar. Zu einer Vergrößerung der Kraftflußdichte und daraus resultierend einer größeren Kompaktheit eines Ventilantriebe sind sie aber nicht geeignet.

Wird der Läufer des Linearmotors sternförmig ausgebildet, so ergibt sieh damit eine größere magnetische Luftspaltfläche. Dabei besteht der zugehörige Stator aus Spulenanordnungen, deren Anzahl der Zahl der Sternspitzen entspricht. Die Statorspulenanordnungen befinden sich zwischen den Schenkeln der Sternspitzen und sind in axialer Richtung parallel zur Läuferachse orientiert.

Die mit der erfindungsgemäßen Konstruktion erzielbaren Vorteile werden von keiner der bekannten Vorschläge erreicht.

Im folgenden wird die erfindungsgemäße Ventilsteuerung anhand der beigefügten Zeichnungen näher erläutert.
Fig. 1 zeigt in schematischer Darstellung einen Längsschnitt durch ein erfindungsgemäßes Gaswechselventil;
Fig. 2 zeigt - ebenfalls als Längsschnitt in schematischer Darstellung - ein auf herkömmliche Weise betreibbares Gaswechselventil;
Fig. 3 zeigt eine bevorzugte Lösungsvariante des erfindungsgemäßen Gaswechselventile - ebenfalls in einem schematischen Längsschnitt;
Fig. 4 zeigt den Querschnitt durch eine weitere Ausbildungsform des für das Gaswechselventil zu verwendenden Linearmotors.

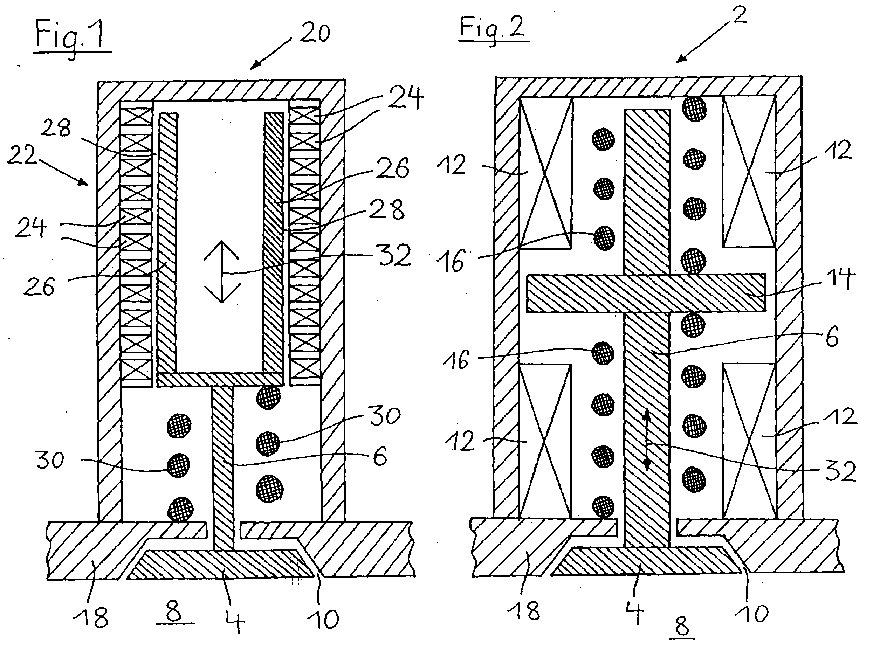

Das bekannte, in Fig. 2 schematisch dargestellte Gaswechselventil 2 besteht aus einem Tellerventil mit axial bewegbarem Ventilteller 4 und Schaft 6, wobei ein zum Brennraum 8 führender Gaskanal 10 mit Hilfe des Ventiltellers 4 geöffnet und geschlossen werden kann. Der Betätigungsmechanismus besteht aus Schaltspulen 12 und einem diesen gegenüberstehenden Anker 14, der einerseits mit dem Schaft 6 starr verbunden andererseits über Federn 16 gegenüber dem ortsfesten Zylinderkopf 18 elastisch gelagert ist.

Das in Fig 1 schematisch dargestellte erfindungsgemäße Gaswechselventil 20 besteht ebenfalls aus einem Tellerventil mit axial bewegbarem Ventilteller 4 und Schaft 6, wobei ein zum Brennraum 8 führender Gaskanal 10 ebenfalls durch den Ventilteller 4 geöffnet und geschlossen werden kann.

Im Unterschied zu dem bekannten Gaswechselventil 2 (Fig. 2) dient im erfindungsgemäßen Gaswechselventil 20 ein Linearmotor 22 als elektromagnetische Stelleinrichtung. In der in Fig. 1 dargestellten einfachen Ausführungsform weist der Linearmotor 22 eine zylindrische Gestalt auf. Der Zylinderquerschnitt kann dabei die unterschiedlichsten Geometrien, wie z. B. Kreis, Kreisring, Oval, Ellipse u. a. aufweisen. Der Linearmotor besteht aus einem stabförmighohl- oder vollzylindrischen, aus (weich-)magnetischem Material bestehenden, axial bewegbaren Läufer 26 und einem feststehenden, den Läufer umhüllenden, mit Spulenwicklungen versehenen, hohlzylindrischen Stator 24. Zwischen Stator 24 und Läufer 26 befindet sich ein zylindrischer Luftspalt 28. Der gegenüber dem ortefesten Zylinderkopf 18 über eine Feder 30 elastisch abgestützte Läufer 26 ist axial in beiden Richtungen 32 und in jeder Position relativ zum Stator 24 steuerbar.
Der angestrebte, größtmögliche Außendurchmesser der Stator/Läufer-Anordnung 22 wird von der Zylindergröße des Verbrennungsmotors bestimmt: er kann zwischen 30 und 60 mm sein.

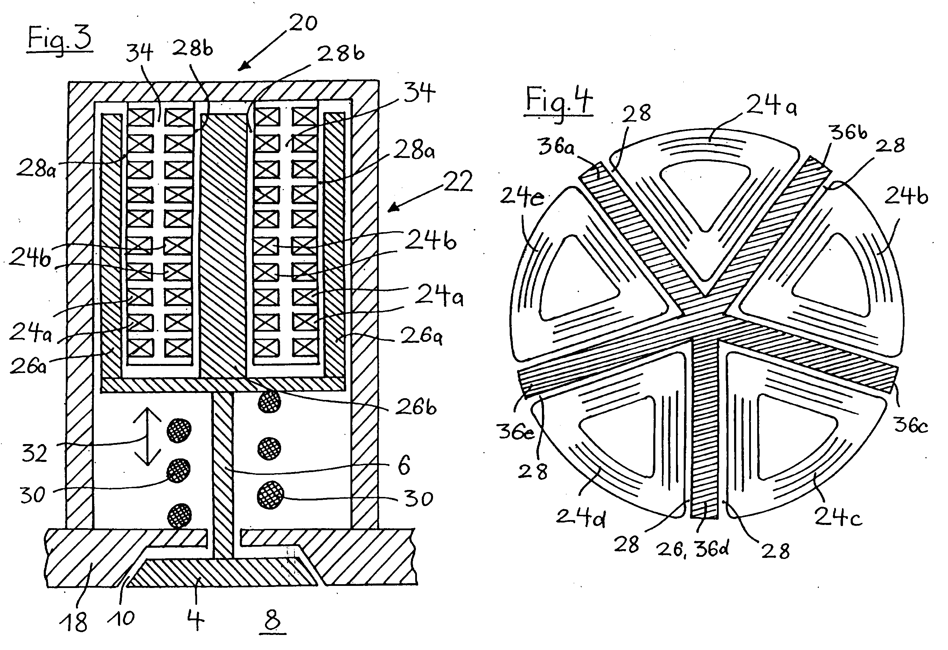

Die in Fig. 3 schematisch dargestellte Ausführungsform des erfindungsgemäßen Linearmotors 22 weist zwei zueinander koaxiale zylindrische Luftspalte 28a, 28b auf. Der mit Spulenanordnungen 24a, 24b versehene Stator des Linearmotors 22 weist eine hohlzylindrische Gestalt auf. Der Läufer 26 besteht aus einem hohlzylindrischtopfförmigen 26a und einem koaxial darin angeordneten, ebenfalls aus (weich-)magnetischem Werkstoff bestehenden Voll- oder Hohl-Zylinder 26b. Der Läufer 26a, 26b ist gegenüber dem Stator 24a, 24b - den zylindrischen Luftspalten 28a, 28b entlang - in beiden Richtungen 32 und in jeder Position relativ zum Stator 24a, 24b steuerbar.

In der in Fig 4 dargestellten Ausführungsform weist der Läufer 26 des Linearmotors 22 eine sternförmig-zylindrische Gestalt 36 auf. Der Stator 24 besteht aus Spulenanordnungen 24a, 24b, ..., deren Anzahl der Zahl der Sternspitzen 36a, 36b, ... entspricht. Die Stator-Spulenanordnungen 24a, 24b, ... befinden sich zwischen den Schenkeln der Sternspitzen 36a, 36b, ... und sind in axialer Richtung parallel zur Läuferachse (Bewegungsrichtung 32) orientiert.

### Bezugszeichenliste

- 2: Gaswechselventil (St. d. T.)
- 4: Ventilteller
- 6: Schaft
- 8: Brennraum
- 10: Gaskanal
- 12: Schaltspule
- 14: Anker
- 16: Federn (St. d. T.)
- 18: Zylinderkopf
- 20: Gaswechselventil (Erfindung)
- 22: Linearmotor, Stator/Läufer-Anordnung
- 24: Spulenwicklung, Stator
- 24a, 24b: Spulenwicklungen
- 26: Läufer
- 26a, 26b: Läufer
- 28: Luftspalt
- 28a, 28b: Luftspalt
- 30: Feder (Erfindung)
- 32: Bewegungsrichtung
- 34: Zwischenraum
- 36: sternförmiger Läufer
- 36a, 36b: Sternspitzen

## Patentansprüche

1. Die Verwendung eines Linearmotors (22) als elektromagnetische Stelleinrichtung in einem Gaswechselventil (20) eines Hubkolbenmotors, eines Kolbenverdichters oder einer Maschine gleichen Wirkprinzips,
wobei der Linearmotor (22) eine zylindrische Gestalt aufweist,
mit einem stabförmig-zylindrischen, aus (weich-)magnetischem Material bestehenden, axial bewegbaren Läufer (26), und
mit einem feststehenden, den Läufer (26) umhüllenden, mit Spulenwicklungen versehenen, hohlzylindrischen Stator (24),
wobei der Läufer (26) axial in beiden Richtungen (32) in jeder Position relativ zum Stator (24) steuerbar ist.

2. Gaswechselventil nach Anspruch 1,
**dadurch gekennzeichnet**,
daß der mit Spulenwicklungen (24a, 24b) versehene Stator (24) des Linearmotors (22) eine hohlzylindrische Gestalt aufweist,
wobei der Spulenbereich in eine innere (24a) und eine äußere Spule (24b) aufgeteilt ist, die jeweils getrennt ansteuerbar sind,
und daß der Läufer (26) aus einem den Stator (24) umhüllenden, hohlzylindrisch-topfförmigen (26a) und einem darin koaxial angeordneten zylindrischen (26b), aus (weich-)magnetischem Material bestehenden und dem Stator (24) gegenüber axial bewegbaren Läufer besteht, der in beiden Richtungen (32) und in jeder Position relativ zum Stator (24) steuerbar ist.

3. Gaswechselventil nach Anspruch 2,
**dadurch gekennzeichnet**,
daß der Zwischenraum (34) zwischen der inneren (24a) und der äußeren Spule (24b) mit einem eingelegten Eisenring oder durch Vorprägung eines Kupferblechs mit ferromagnetischem Material ausgefüllt ist.

4. Gaswechselventil nach einem der Ansprüche 1 bis 3,
**dadurch gekennzeichnet,**
daß der Spulenbereich aus einem ausgestanzten Kupferring besteht,
der einen rechteckigen Querschnitt aufweist.

5. Gaswechselventil nach einem der Ansprüche 1 bis 3,
**dadurch gekennzeichnet,**
daß der Spulenbereich aus einem Draht gewickeltes, in vertikaler Richtung einlagiges Spulenelement ist.

6. Gaswechselventil nach einem der Ansprüche 1 bis 3,
**dadurch gekennzeichnet**,
daß der Spulenbereich ein ausgestanzter und geprägter oder auch getrennter Kupferring ist.

7. Gaswechselventil nach Anspruch 1,
**dadurch gekennzeichnet**,
daß der Linearmotor (22) einen zylindrischen Luftspalt (28) mit spiralförmigem Querschnitt aufweist (mit entsprechender Ausgestaltung von Läufer und Stator),
wobei ein Drehen eines mit dem Linearmotor in Wirkverbindung stehenden Ventiltellers durch Drehen des Gesamtaufbaus oder durch eine dreh- und lösbare Verbindung zwischen Ventilschaft und Läufer ermöglicht wird.

8. Gaswechselventil nach einem der vorhergehenden Ansprüche,
**dadurch gekennzeichnet**,
daß der Läufer (26) des Linearmotors (22) sternförmigzylindrische Gestalt (36) aufweist,
und daß der Stator (24) aus Spulenanordnungen (24a, 24b, ...) besteht, deren Anzahl der Zahl der Sternspitzen (36a, 36b, ...) entspricht, wobei sich die Stator-Spulen (24a, 24b, ...) zwischen den Schenkeln der Sternepitzen (36a, 36b, ...) befinden und in axialer Richtung parallel zur Läuferachse (Bewegungsrichtung 32) orientiert sind.
